# EUROPÄISCHE PATENTANMELDUNG

(11) **EP 2 605 052 A2**
(43) Veröffentlichungstag der Anmeldung: **19.06.2013**
(21) Anmeldenummer: 12197173.3
(22) Anmeldetag: 14.12.2012
(51) Int. Cl.: G02B 6/44, H04Q 1/06

(54) **Halterungsmodul zum Befestigen kassettenartiger oder tablettartiger Bauelemente für die Aufnahme optischer Fasern**

(30) Priorität: 14.12.2011 DE 102011056409
(71) Anmelder: BV Twentsche Kabelfabriek (TKF), 7481 KJ Haaksbergen (NL)
(72) Erfinder: Kopf, Pia, 14052 Berlin (DE); Adomeit, Jörg, 12307 Berlin (DE)
(74) Vertreter: Reininger, Jan Christian

(57) **Zusammenfassung**

Die Erfindung betrifft ein Halterungsmodul (1) zum Befestigen kassettenartiger oder tablettartiger Bauelemente (B) für die Aufnahme optischer Fasern aufweisend folgende Merkmale:
● eine Frontseite (11,111), die den am Halterungsmodul (1) befestigbaren kassettenartigen oder tablettartigen Bauelementen (B) zugewandt ist,
● eine Rückseite (12,112), die der Frontseite (11,111) gegenüber liegend abgewandt ausgebildet ist,
● ein oberer Seitenbereich (13,113), ein unterer Seitenbereich (14,114) und seitliche Seitenbereiche (15,115), die sich zwischen der Frontseite (11,111) und der Rückseite (12,112) des Halterungsmoduls (1) erstrecken, wobei sich eine Mehrzahl von Halterungsmodulen mit ihren unteren Seitenbereichen und ihren oberen Seitenbereichen entlang einer Stapetrichtung (S) benachbart anordnen lassen und
● Fixiermittel (16,116) zum Befestigen der kassettenartigen oder tablettartigen Bauelemente (B) am Halterungsmodul (1),
wobei an der Rückseite (11,111) und/oder an den seitlichen Seitenbereiche (15,115) des Halterungsmoduls (1) Nachrüstöffnungen (2) mit jeweils einem Nachrüstkanal (20) vorgesehen sind, und sich jeder Nachrüstkanal (20) bis zur Frontseite (11,111) des Halterungsmoduls (1) erstreckt und jeder Nachrüstkanal (20) das Verlegen einer optischen Faser durch das Halterungsmodul (1) hindurch erlaubt und/oder am Halterungsmodul (1) mindestens ein Faserkanal (3) zur Aufnahme einer Mehrzahl optischer Fasern vorgesehen ist, der sich entlang der Stapetrichtung (S) über das Halterungsmodul (1) erstreckt und der Faserkanal (3) ein Faserkanalbegrenzungselement (30) aufweist, das aus einer geschlossenen, den Faserkanal (3) begrenzenden Position, vom Halterungsmodul (1) derart demontierbar oder in eine lagestabil geöffnete Position bewegbar ist, dass eine in Stapelrichtung (S) erstreckte Faserkanalöffnung (31) des Faserkanals zum Einlegen optischer Fasern in den Faserkanal (3) entsteht oder sich eine bereits vorhandene Faserkanalöffnung (31) quer zur Stapelrichtung (S) betrachtet verbreitert.

## Beschreibung

Die Erfindung betrifft ein Halterungsmodul zum Befestigen kassettenartiger oder tablettartiger Bauelemente für die Aufnahme optischer Fasern. Derartige Halterungsmodule kommen für die optische Telekommunikation in FTTx-Netzen (Fiber To The X=[Node, Basement, Loop, Office, Home]) insbesondere in ODF-(Optical Distribution Frame) oder MDU-Einrichtungen (Multi Distribution Unit) zum Einsatz.

Die kassettenartigen oder tablettartigen Bauelementen für die Aufnahme optischer Fasern weisen eine gewisse flächige Ausdehnung auf, weil in einem solchen Bauelement die Spleißreserve einer optischen Faser aufgewickelt Platz finden muss. Dabei muss die Biegung der aufgewickelten Faser größer sein als die minimale Biegung, die erlaubt ist, so dass die für die optische Faser spezifischen Fasersignale durch die Faserbiegung nicht signifikant beeinflusst werden. Im kassettenartigen oder tablettartigen Bauelement kann beispielsweise ein einzelner Spleiß dauerhaft abgelegt sein. Ebenso ist es möglich, dass passive optische Bauelemente wie WDM-Einrichtungen (Wavelength Division Multiplexing), optische Schalter oder optische Steckeranschlüsse mit der oder den ein- und auslaufenden optischen Fasern verspleißt und im Bauelement dauerhaft angeordnet werden.

In ODF- oder MDU-Einrichtungen ist oftmals eine große Zahl an Halterungsmodulen mit kassettenartigen oder tablettartigen Bauelementen für die Aufnahme optischer Fasern vorgesehen. Dadurch müssen entsprechend viele optische Fasern in die Einrichtungen hineingeführt und in der Einrichtung selbst an das richtige kassettenartige oder tablettartige Bauelement geführt werden. Ein derartiges Halterungsmodul mit einem kassettenartigen Bauelement für optische Fasern ist aus der US 2009/0148117 bekannt. Diese Halterungsmodule, an denen sich jeweils ein kassettenartiges Bauelement verschwenkbar befestigen lässt weisen jeweils Faserkanäle zum Durchführen der optischen Fasern auf. Diese Halterungsmodule lassen sich entlang einer Stapelrichtung übereinander anordnen. Dabei fluchten die jeweiligen Faserkanäle miteinander, so dass ein modular aufgebauter Faserkanal durch die übereinander gestapelten Faserkanäle der einzelnen Halterungsmodule entsteht. Jede einzelne dieser Faserkanäle weist eine Begrenzungswandung mit einem in Stapelrichtung verlaufenden Schlitz auf. Durch diesen Schlitz lassen sich optische Fasern in den Faserkanal einfädeln. Dabei kann es zur Beschädigung der Fasern kommen, da kurzzeitig ein Unterschreiten des minimalen Biegeradius auftreten kann. Dies stellt ein Montagerisiko dar, das in einer Montagesituationen beim so genannten Routing in einer ODF- oder MDU-Einrichtung, vom technischen Personal als störend empfunden wird.

Weiterhin besteht das Problem, dass sich bekannte Systeme nach ihrer Erstmontage und -verschaltung nur auf umständliche oder aufwändige Art und Weise mit zusätzlichen optischen Fasern erweitern lassen. Bei einer solchen Erweiterung ist es zu bevorzugen, wenn die zusätzlich eingebrachten optischen Fasern keine oder eine möglichst geringe mechanische Wechselwirkung mit den bereits verlegten optischen Fasern aufweisen. Insbesondere ist dabei das Überkreuzen optischer Fasern zu vermeiden.

Der vorliegenden Erfindung liegt somit die Aufgabe zu Grunde, ein Halterungsmodul zum Befestigen kassettenartiger oder tablettartiger Bauelemente für optische Fasern zu schaffen, das in möglichst vielen Montagesituationen eine Vereinfachung beim Verlegen der optischen Fasern ermöglicht.

Diese Aufgabe wird durch ein Halterungsmodul mit den Merkmalen gemäß Anspruch 1 gelöst.

Das Halterungsmodul weist folgende Merkmale auf:
● eine Frontseite die den am Halterungsmodul befestigbaren kassettenartigen oder tablettartigen Bauelementen zugewandt ist,
● eine Rückseite, die der Frontseite gegenüber liegend abgewandt ausgebildet ist,
● ein oberer Seitenbereich, ein unterer Seitenbereich und seitliche Seitenbereiche, die sich zwischen der Frontseite und der Rückseite des Halterungsmoduls erstrecken, wobei sich eine Mehrzahl von Halterungsmodulen mit ihren unteren Seitenbereichen und ihren oberen Seitenbereichen entlang einer Stapelrichtung benachbart anordnen lassen und
● Fixiermittel zum Befestigen der kassettenartigen oder tablettartigen Bauelemente am Halterungsmodul,
wobei an der Rückseite und/oder an den seitlichen Seitenbereichen des Halterungsmoduls Nachrüstöffnungen mit jeweils einem Nachrüstkanal vorgesehen sind, und sich jeder Nachrüstkanal bis zur Frontseite des Halterungsmoduls erstreckt und jeder Nachrüstkanal das Verlegen einer optischen Faser durch das Halterungsmodul hindurch erlaubt und/oder
am Halterungsmodul mindestens ein Faserkanal zur Aufnahme einer Mehrzahl optischer Fasern und mit Ein-Austrittsöffnungen zur Führung optischer Fasern von und zu den kassettenartigen oder tablettartigen Bauelementen vorgesehen ist, der sich entlang der Stapelrichtung über das Halterungsmodul erstreckt und der Faserkanal ein
Faserkanalbegrenzungselement aufweist, das aus einer geschlossenen, den Faserkanal begrenzenden Position, vom Halterungsmodul derart demontierbar oder in eine lagestabil geöffnete Position bewegbar ist, dass eine in Stapelrichtung erstreckte Faserkanalöffnung des Faserkanals zum Einlegen optischer Fasern in den Faserkanal entsteht oder sich eine bereits vorhandene Faserkanalöffnung quer zur Stapelrichtung betrachtet verbreitert.

Der erste Funktionskomplex des erfindungsgemäßen Halterungsmoduls sieht somit eine Mehrzahl von Nachrüstöffnungen mit jeweils einem Nachrüstkanal vor, wobei über die einfach zu erreichende Nachrüstöffnung insbesondere das nachträgliche Einbringen von optischen Fasern insbesondere in Form von Pigtails oder Patchcords in ein bereits verschaltetes optisches Telekommunikationsnetzwerk ermöglicht wird. Die einfache Erreichbarkeit ist dadurch gegeben, dass die Nachrüstöffnung rückseitig oder an einer der beiden seitlichen Seitenbereiche des Halterungsmoduls angeordnet ist. Der Durchmesser der Nachrüstkanäle liegt im Bereich von üblicherweise mehr als einem Millimeter. Es ist insbesondere von Vorteil, wenn die Nachrüstkanäle so breit ausgebildet sind, dass diese so genannte Tubes für die Montage optischer Fasern aufnehmen können. Durch Struktur und Funktion des ersten Funktionskomplexes können auf gleichem Bauraum eine größere Zahl optischer Fasern geführt und verschaltet werden. Dadurch werden Kosten gespart, denn für mehr Kapazität werden keine größeren OFD- oder MDU-Einrichtungen erforderlich.

Der zweite Funktionskomplex erleichtert die Arbeit beim Verlegen optischer Fasern in den Faserkanälen. Dadurch dass die Faserkanalbegrenzungselemente als separate und/oder bewegliche Bauelemente ausgebildet sind, lässt sich entweder eine bereits vorhandene spaltförmige Faserkanalöffnung auf einfache Weise verbreitern oder die Bewegung des Faserkanalbegrenzungselements lässt eine hinreichend breite spaltförmige Faserkanalöffnung entstehen. Bei der Variante eines beweglichen Faserkanalbegrenzungselementes ist die Möglichkeit der Einstellung einer lagestabil geöffneten Position entscheidend. Lagestabil ist derart definiert, dass keine extern aufzuwendenden Kräfte erforderlich sind, um das Faserkanalbegrenzungselement in der geöffneten Position belassen zu wollen. Mit anderen Worten muss die Montageperson, nachdem die lagestabil geöffnete Position herbeigeführt worden ist, keine Finger dauerhaft dazu einsetzen, dass die für die bequeme Montage verbreiterte Faserkanalöffnung ihre Breite behält. Auf diese Weise ist ein bequemes Einlegen optischer Fasern durch die verbreiterte Faserkanalöffnung in den Faserkanal gewährleistet.

Bevorzugt für die Ausführungsformen mit dem zweiten Funktionskomplex ist der Faserkanal derart ausgebildet und angeordnet, dass der Faserkanal des Halterungsmoduls entlang der Stapelrichtung betrachtet bei gestapelter Anordnung einer Mehrzahl solcher Halterungsmodule zu einem aus den Faserkanälen benachbarten Halterungsmodule modular aufgebauten Faserkanal fluchtet. Auf diese Weise lässt sich mit dem identischen Bauelement die Kapazität miteinander zu verschaltender optischer Fasern leicht aufskalieren.

Für Halterungsmodule mit einer der beiden oder mit beiden Funktionskomplexen ist bevorzugt der obere Seitenbereich und der untere Seitenbereich flach ausgebildet sind. Dadurch lassen sich die einzelnen Halterungsmoduls besonders gut stapeln.

Für die Halterungsmodule mit dem zweiten Funktionskomplex ist es von Vorteil, dass der Faserkanal mit seiner äußeren Begrenzung zumindest einen Teil eines der beiden seitlichen Seitenbereiche des Halterungsmoduls bildet. Dies ermöglicht eine seitliche Zuführung optischer Fasern zu den kassettenartigen oder tablettartigen Bauelementen. Dabei ist es besonders bevorzugt, dass das Halterungsmodul einen weiteren Faserkanal mit Ein-Austrittsöffnungen zur Führung optischer Fasern von und zu den kassettenartigen oder tablettartigen Bauelementen aufweist, der im Bereich des anderen der beiden seitlichen Seitenbereiche angeordnet ist. Dadurch umschließen die beiden Faserkanäle beidseitig einen Mittelbereich in dem sich die kassettenartigen oder tablettartigen Bauelemente anordnen lassen, so dass sich optische Fasern im einen Randbereich des Halterungsmoduls zu- und im anderen Randbereich des Halterungsmoduls abführen lassen.

Als vorteilhafte Weiterbildung des Halterungsmoduls mit beidseitig angeordneten Faserkanälen ist vorgesehen, dass das Halterungsmodul entlang der Stapelrichtung betrachtet hinsichtlich der Anordnung der Faserkanäle und/oder der Anordnung der Nachrüstöffnungen mit den Nachrüstkanälen spiegelsymmetrisch aufgebaut ist. Auf diese Weise ergibt sich ein einfach nachvollziehbarer Aufbau des Halterungsmoduls und der dadurch verkörperten Möglichkeiten zur Leitung optischer Fasern.

Weiterhin für Halterungsmodule mit dem zweiten Funktionskomplex ist es vorteilhaft, dass das beweglich ausgebildete Faserkanalbegrenzungselement in einer derartigen Lagereinrichtung angeordnet ist, dass das Faserkanalbegrenzungselement durch eine Translationsbewegung und/oder durch eine Rotationsbewegung in die lagestabil geöffnete Position bewegbar ist. Abhängig vom vorhandenen Bauraum ist der einen oder anderen Variante der Vorzug zu geben.

Für die vorangehend beschriebenen Varianten hinsichtlich des Faserbegrenzungselements ist es vorteilhaft, dass das beweglich ausgebildete Faserkanalbegrenzungselement für den Fall einer reinen Rotationsbewegung einstückig mit dem Halterungsmoduls ausgebildet ist oder für den Fall einer reinen Translationsbewegung oder den Fall einer kombinierten Rotations-Translationsbewegung als separates Bauelement ausgebildet ist. Die einstückige Variante mit der reinen Rotationsbewegung lässt sich beispielsweise durch die Ausbildung eines Filmscharniers in einem einstückigen Spritzgussteil realisieren.

Weiterhin ist es für die Ausführungsformen des Halterungsmoduls, die den ersten Funktionskomplex aufweisen, vorteilhaft, dass die Nachrüstkanäle benachbart zu den Ein-Austrittsöffnungen des Faserkanals im Bereich der Fixiermittel zum Befestigen der kassettenartigen oder tablettartigen Bauelemente aus der Frontseite des Halterungsmoduls austreten.

Als bevorzugte Weiterbildung dieser Variante ist vorgesehen, dass die Nachrüstkanäle der Nachrüstöffnungen entlang der Stapelrichtung betrachtet benachbart zueinander und äquidistant am Halterungsmodul angeordnet sind. Darauf aufbauend ist es vorteilhaft, dass senkrecht zur Stapelrichtung betrachtet jeder der Nachrüstkanäle auf eines der Fixiermittel zum Befestigen der kassettenartigen oder tablettartigen Bauelemente zuläuft, wobei die Fixiermittel entsprechend äquidistant zu den Nachrüstkanälen entlang der Stapelrichtung angeordnet sind. Daraus ergibt sich ein gleichmäßiger Aufbau und jeder Nachrüstöffnung mit zugehörigem Nachrüstkanal ist ein kassettenartiges oder tablettartiges Bauelemente definiert zugeordnet. Das heißt für das Montagepersonal ist klar, wenn eine optische Faser in eine definierte, von außen her gut zugängliche Nachrüstöffnung des Halterungsmoduls geschoben wird, dass diese Faser in einem durch die äquidistante Anordnung klar zugeordneten und somit definierten kassettenartigen oder tablettartigen Bauelement eingeführt werden kann. Dadurch werden sowohl das Erst-Routing als auch das Nachrüst-Routing erheblich vereinfacht.

Besonders bevorzugt ist vorgesehen, dass die Nachrüstkanäle in einer durch den Faserkanal und durch die Fixiermittel aufgespannten Ebene aus der Frontseite des Halterungsmoduls austreten. Durch diese Struktur wird eine besonders kompakte Bauform des Halterungsmoduls ermöglicht.

Weiterhin ist es für Halterungsmodule mit dem ersten Funktionskomplex vorteilhaft, dass entlang der Stapelrichtung betrachtet benachbart zu jedem Nachrüstkanal auf der Frontseite des Halterungsmoduls eines der Fixiermittel zum Befestigen der kassettenartigen oder tablettartigen Bauelemente angeordnet ist. Dadurch kann jedes der Bauelemente auf einfache Weise mit optischen Fasern nachgerüstet werden.

Grundsätzlich lässt sich das Halterungsmodul mehrteilig aufbauen. Insbesondere ist es von Vorteil, dass das Halterungsmodul ein erstes Halterungsteilmodul und ein an dem ersten Halterungsteilmodul fixierbares zweites Halterungsteilmodul aufweist. Die einzelnen Halterungsteilmodule weisen dabei individuelle Funktionalitäten auf, die sich so auf einfache Weise kombinieren lassen. Dies ermöglicht einen besonders variablen Einsatz. Abhängig vom vorhandenen Bauraum können eine unterschiedliche Zahl an Funktionalitäten realisiert werden. Eine vorteilhafte Variante zur Kopplung des ersten und zweiten Funktionskomplexes besteht darin, dass die Nachrüstöffnungen an seitlichen Seitenbereichen des ersten Halterungsteilmoduls angeordnet sind und dass der Faserkanal und das Faserkanalbegrenzungselement am zweiten Halterungsteilmodul angeordnet sind. Es ist jedoch ebenso denkbar, ein einstückiges Halterungsmodul zu realisieren, das in sich die beiden Funktionskomplexe vereint.

Weitere Merkmale und Eigenschaften werden anhand der nachfolgend rein beispielhaft beschriebenen bevorzugten Ausführungsformen der Erfindung verdeutlicht.

Es zeigt:
- Figur 1: eine perspektivische Ansicht einer ersten Ausführungsform des Halterungsmoduls 1 aufgebaut aus einem ersten Halterungsteilmodul 10 und einem zweiten Halterungsteilmodul 100, wobei beispielhaft eine Mehrzahl am Halterungsmodul 1 befestigter kassettenartiger oder tablettartiger Bauelemente B für die Aufnahme optischer Fasern dargestellt ist;
- Figur 2: eine perspektivische Ansicht einer zweiten Ausführungsform des Halterungsmoduls 1, wobei diese Ausführungsform nur mit dem Funktionskomplex in Form von Nachrüstöffnungen 2 mit Nachrüstkanälen 20 ausgebildet ist;
- Figur 3: eine perspektivische Ansicht einer dritten Ausführungsform des Halterungsmoduls 1, wobei diese Ausführungsform nur mit dem zweiten Funktionskomplex in Form separater, beweglich ausgebildeten Faserkanalbegrenzungselemente 30 ausgebildet ist;
- Figur 4: eine perspektivische Ansicht der ersten Ausführungsform des Halterungsmoduls 1 aus Figur 1, das mit seinem ersten Halterungsteilmodul 10 gemäß der zweiten Ausführungsform aus Figur 2 und seinem zweiten Halterungsteilmodul 100 gemäß der dritten Ausführungsform aus Figur 3 den ersten und den zweiten Funktionskomplex im Halterungsmodul vereint, wobei zur besseren Übersicht die kassettenartigen oder tablettartigen Bauelemente B nicht dargestellt sind;
- Figur 5: eine erste Variante der ersten Ausführungsform aus den Figuren 1 und 4, wobei hier die Faserkanalbegrenzungselemente 30 vom Halterungsmodul 1 ablösbar ausgebildet sind und
- Figur 6: eine zweite Variante der ersten Ausführungsform aus den Figuren 1 und 4, wobei hier die Faserkanalbegrenzungselemente 30 derart gelagert sind, dass diese in einer Rotationsbewegung verschwenkbar ausgebildet sind.

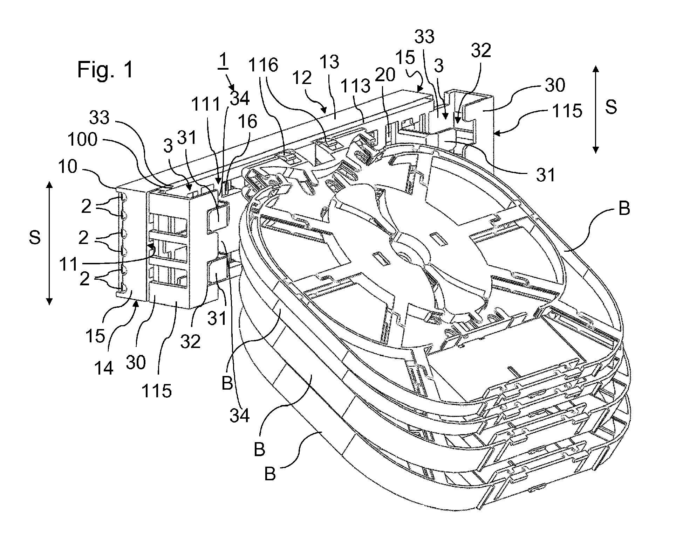

Figur 1 zeigt eine perspektivische Ansicht einer ersten Ausführungsform des Halterungsmoduls 1 aufgebaut aus einem ersten Halterungsteilmodul 10 und einem am ersten Halterungsteilmodul 10 befestigten zweiten Halterungsteilmodul 100. Das erste Halterungsteilmodul 10 weist einen quaderförmigen Grundkörper mit einer Rückseite 12, einer als oberen Seitenbereich 13 bezeichneten Oberseite, einer als unterem Seitenbereich 14 bezeichneten Unterseite und zwei seitlichen Seitenbereichen 15 auf. Aufgrund der quaderförmigen Gestalt sind der obere Seitenbereich 13 und der untere Seitenbereich 14 gleich groß ausgebildet. Dies gilt ebenso für die beiden seitlichen Seitenbereiche 15. Auch die Rückseite 12 weist im Wesentlichen die gleichen Flächenmaße auf wie die Vorderseite 11, wobei diese fast vollständig durch die Rückseite 112 des zweiten Halterungsteilmoduls 100 abgedeckt ist. Das erste Halterungsteilmodul 10 weist Fixiermittel 16 auf, die als Rastnasen ausgebildet sind und in passend ausgebildete Rastöffnungen im zweiten Hatterungsteitmodut 100 einrasten, um die beiden Hatterungsteitmodule 10,100 zum Halterungsmodul 1 zu verbinden.

Das zweite Halterungsteilmodul 100 weist ebenfalls eine Frontseite 111, eine Rückseite 112, einen oberen Seitenbereich 113, einen unteren Seitenbereich 114 und zwei seitliche Seitenbereiche 115 auf. Frontseite 111 und Rückseite 112 entsprechen in ihrer Flächenausdehnung im Wesentlichen der Flächenausdehnung der Frontseite 11 und der Rückseite 12 des ersten Halterungsteilmoduls 10. Dadurch dass die beiden Halterungsteilmodule 10,100 im Grunde bündig übereinander zu liegen kommen lässt sich eine kompakte Form des in sich modular aufgebauten Halterungsmoduls 1 realisieren. Die beiden seitlichen Seitenbereiche 115 des zweiten Halterungsteilmoduls 100 sind als zwei Faserkanalbegrenzungselemente 30 ausgebildet. Diese Faserkanalbegrenzungselemente 30 sind in Lagereinrichtungen 32 derart gelagert, dass diese sich translatorisch parallel zur Grenzebene zwischen den beiden Halterungsteilmodulen 10,100 bewegen lassen. Die Faserkanalbegrenzungselemente 30 erstrecken sich über die gesamte Höhe des Halterungsmoduls 1 und weisen jeweils ein zur Mitte der Frontseite 111 hin geöffnetes U-förmiges Querschnittsprofil auf. Zusammen mit ortsfest am zweiten Halterungsteilmodul 100 befestigten fixen Faserkanalbegrenzungselementen 31 mit einem nach außen weisenden, L-förmigen Querschnitt umschließen die beiden Faserkanalbegrenzungselemente 30,31 jeweils einen Faserkanal 3, in den sich eine Vielzahl optischer Fasern einlegen lassen. Die beiden Faserkanalbegrenzungselemente 30,31 sind jeweils durch eine spaltförmige Faserkanalöffnung 32 voneinander getrennt. Über die translatorisch bewegliche Lagerung der Faserbegrenzungselemente 30 lässt sich die spaltförmige Faserkanalöffnung 32 auf einfache Weise deutlich vergrößern. Dabei lassen sich die Faserbegrenzungselemente 30 in lagestabil geöffnete Positionen bewegen. Dadurch dass die geöffnete Position lagestabil ist, wird das Einlegen optischer Fasern in die Faserkanäle 3 erleichtert. Lagestabil meint, dass keine externe Haltekraft benötigt wird, um den geöffneten Zustand beizubehalten. Die in den Faserkanälen 3 eingelegten optischen Fasern werden dort durch die als Niederhalter wirkenden Faserbegrenzungselemente 30 räumlich fixiert. Entlang der Erstreckungsrichtung des Faserkanals 3 betrachtet, weisen die Faserkanalbegrenzungselemente 30,31 jeweils Ein-Austrittsöffnungen 34 auf. Durch diese Ein-Austrittsöffnungen 34 lassen sich einzelne optische Fasern aus den Faserkanälen 3 seitlich herausführen. Zwischen den beiden Faserkanälen 3 sind eine Mehrzahl von Fixiermittel 116 zum Befestigen einer Mehrzahl kassettenartiger oder tablettartiger Bauelemente B für die Aufnahme optischer Fasern ausgebildet. In Figur 1 sind rein beispielhaft vier übereinander angeordnete derartige Bauelemente B gezeigt.

Das erste Halterungsteilmodul 10 weist in beiden seitlichen Seitenbereichen 15 eine Mehrzahl von Nachrüstöffnungen 2 auf. Von diesen Nachrüstöffnungen 2 führen Nachrüstkanäle 20 durch das erste Halterungsteilmodul 10 bis zur Rückseite 112 des zweiten Halterungsteilmoduls 100. Im zweiten Halterungsteilmodul 100 befinden sich wiederum passend angeordnete Öffnungen, so dass sich die Nachrüstkanäle 20 bis zu Bereichen auf der Frontseite 111 des zweiten Halterungsteilmoduls 100 erstrecken, die nach innen benachbart zu den Faserkanälen 3 angeordnet sind. Durch diese Nachrüstkanäle 20 lassen sich optische Fasern oder Tubes zum Einblasen oder Einführen optischer Fasern verlegen. Dies kann insbesondere nachträglich, also nach dem Routing einer durch die Faserkanäle 3 des Halterungsmoduls 1 geführten Vielzahl optischer Fasern vorgenommen werden.

Aufgrund der quaderförmigen Grundform des Halterungsmoduls 1 lassen sich diese auf einfache Weise in einem Optical Distribution Frame (ODF) oder in einer Multi Distribution Unit (MDU) entlang einer mit Doppelpfeilen verdeutlichten Stapelrichtung S übereinander anordnen. Dabei kommen die Faserkanäle 3 der gestapelten Halterungsmodule 1 übereinander zu liegen und fluchten zu einem modular aufgebauten Faserkanal. Durch diesen lassen sich über die gewünschte Länge optische Fasern für das Routing einlegen und fixieren.

Die erste Ausführungsform des Halterungsmoduls 1 vereint die als erster Funktionskomplex bezeichnete Funktionalität der Nachrüstöffnungen 2 mit Nachrüstkanälen 20 im ersten Halterungsteilmodul 10 mit der als zweiter Funktionskomplex bezeichneten Funktionalität der als separate Bauelemente ausgebildeten, beweglichen Faserkanalbegrenzungselementen 30, die sich entweder vom Halterungsmodul demontieren oder in eine lagestabil geöffnete Position bewegen lassen.

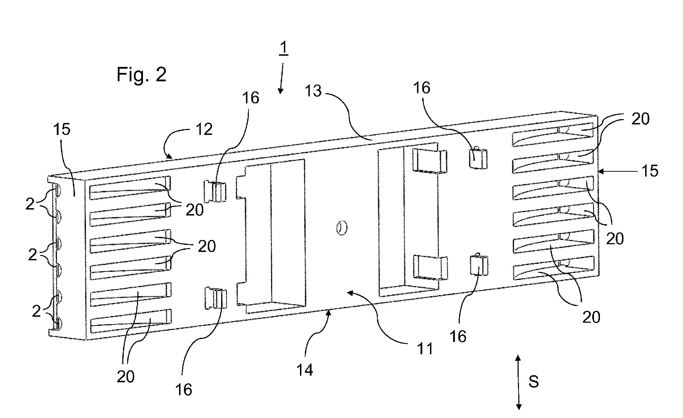

Figur 2 zeigt eine perspektivische Ansicht einer zweiten Ausführungsform des Halterungsmoduls 1, wobei diese Ausführungsform nur mit dem ersten Funktionskomplex in Form von Nachrüstöffnungen 2 mit Nachrüstkanälen 20 ausgebildet ist. Der quaderförmige Grundkörper dieses Halterungsmoduls 1 entspricht dem des ersten Halterungsteilmoduls 10 aus Figur 1. Zur Vermeidung von Wiederholungen hinsichtlich Struktur und Funktionalität wird daher auf die Ausführungen zur Figur 1 Bezug genommen. Diese gelten für die zweite Ausführungsform entsprechend. Die Fixiermittel 16 eignen sich grundsätzlich auch dazu, an diesen mittelbar oder unmittelbar kassettenartige oder tablettartige Bauelemente für die Aufnahme optischer Fasern zu befestigen.

An den auf der Frontseite 11 des Halterungsmoduls 1 als Rastnasen ausgebildeten Fixiermitteln 16 lassen sich mittelbar, wie in Figur 1 gezeigt, oder unmittelbar die kassettenartigen oder tablettartigen Bauelemente für die Aufnahme optischer Fasern befestigen. Eine Mehrzahl von Halterungsmodulen gemäß dieser zweiten Ausführungsform lässt ebenfalls entlang einer Stapelrichtung S übereinander anordnen. Insofern wird auch auf die Ausführungen zur Funktionalität der Stapelbarkeit Bezug genommen.

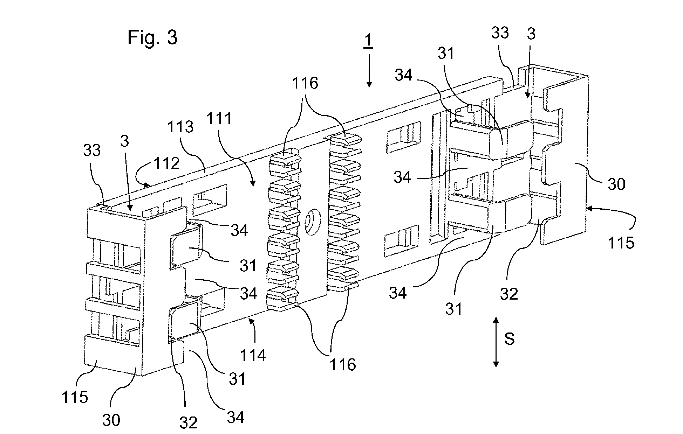

Figur 3 zeigt eine perspektivische Ansicht einer dritten Ausführungsform des Halterungsmoduls 1, wobei diese Ausführungsform nur mit dem zweiten Funktionskomplex in Form separater, beweglich ausgebildeter Faserkanalbegrenzungselemente 30 ausgebildet ist. Der Aufbau dieses Halterungsmoduls 1 entspricht dem des zweiten Halterungsteilmoduls 100. Zur Vermeidung von Wiederholungen wird daher auf die entsprechenden Ausführungen zur Struktur und Funktionalität in Figur 1 verwiesen. Diese gelten hier entsprechend.

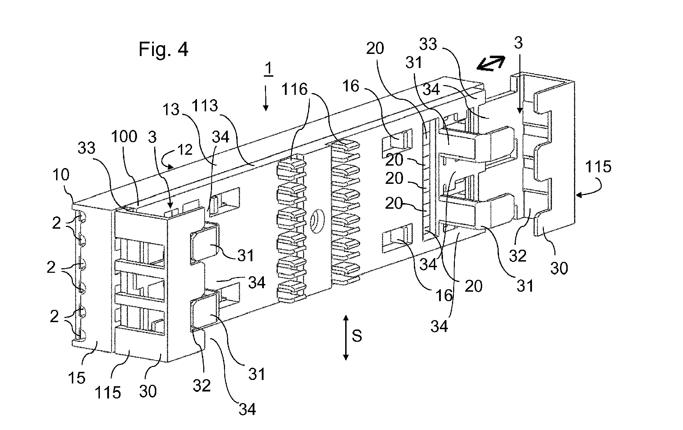

Figur 4 zeigt eine perspektivische Ansicht der ersten Ausführungsform des Halterungsmoduls 1 aus Figur 1, das mit seinem ersten Halterungsteilmodul 10 gemäß der zweiten Ausführungsform aus Figur 2 und seinem zweiten Halterungsteilmodul 100 gemäß der dritten Ausführungsform aus Figur 3 den ersten und den zweiten Funktionskomplex in einem modular aufgebauten Halterungsmodul 1 vereint. Zur besseren Erkennbarkeit sind die kassettenartigen oder tablettartigen Bauelemente B anders als in Figur 1 nicht dargestellt. Dadurch sind, anders als in Figur 1, alle Fixiermittel 116 für das Befestigen von insgesamt sechs kassettenartigen oder tablettartigen Bauelementen B erkennbar.

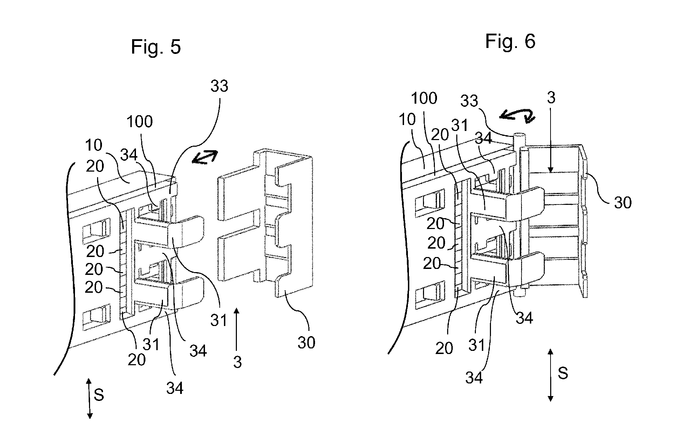

Figur 5 zeigt eine erste Variante der ersten Ausführungsform des modular aufgebauten Halterungsmoduls 1 aus den Figuren 1 und 4 in einer Teilansicht. Die links von der Bruchlinie nicht gezeigten Bereiche entsprechen identisch denen in Figur 1 und 4. Gleiche Bauelemente sind mit gleichen Bezugszeichen versehen und die bereits gemachten Ausführungen zu Struktur und Funktion gelten daher entsprechend. Abweichend von der ersten Ausführungsform ist die Lagereinrichtung 33 derart ausgebildet, dass die Faserkanalbegrenzungselemente 30 vom Halterungsmodul 1 ablösbar sind.

Figur 6 zeigt eine zweite Variante der ersten Ausführungsform des modular aufgebauten Halterungsmoduls 1 aus den Figuren 1 und 4 in einer Teilansicht. Die links von der Bruchlinie nicht gezeigten Bereiche entsprechen identisch denen in Figur 1 und 4. Gleiche Bauelemente sind mit gleichen Bezugszeichen versehen und die bereits gemachten Ausführungen zu Struktur und Funktion gelten daher entsprechend. Abweichend von der ersten Ausführungsform ist die Lagereinrichtung des Faserkanalbegrenzungselementes 30 als ein solches Gelenk ausgebildet, dass dadurch eine Rotationsbewegung des Faserkanalbegrenzungselementes 30 in eine lagestabil geöffnete Position ermöglicht wird und sich auf diese Weise die Faserkanalöffnung 32 erweitern lässt.

### Bezugszeichenliste:

- Halterungsmodul: 1
- erstes Halterungsteilmodul: 10
- zweites Halterungsteilmodul: 100
- Frontseite: 11,111
- Rückseite: 12,112
- oberer Seitenbereich: 13,113
- unterer Seitenbereich: 14,114
- seitliche Seitenbereiche: 15,115
- Fixiermittel: 16,116
- Nachrüstöffnung: 2
- Nachrüstkanal: 20
- Faserkanal: 3
- Faserkanalbegrenzungselement: 30
- fixe Faserkanalbegrenzungselemente: 31
- Faserkanalöffnung: 32
- Lagereinrichtung: 33
- Ein-Austrittsöffnungen des Faserkanals: 34

- kassettenartige oder tablettartige Bauelemente: B
- Stapelrichtung: S

## Patentansprüche

1. Halterungsmodul (1) zum Befestigen kassettenartiger oder tablettartiger Bauelemente (B) für die Aufnahme optischer Fasern aufweisend folgende Merkmale:
● eine Frontseite (11,111), die den am Halterungsmodul (1) befestigbaren kassettenartigen oder tablettartigen Bauelementen (B) zugewandt ist,
● eine Rückseite (12,112), die der Frontseite (11,111) gegenüber liegend abgewandt ausgebildet ist,
● ein oberer Seitenbereich (13,113), ein unterer Seitenbereich (14,114) und seitliche Seitenbereiche (15,115), die sich zwischen der Frontseite (11,111) und der Rückseite (12,112) des Halterungsmoduls (1) erstrecken, wobei sich eine Mehrzahl von Halterungsmodulen mit ihren unteren Seitenbereichen und ihren oberen Seitenbereichen entlang einer Stapelrichtung (S) benachbart anordnen lassen und
● Fixiermittel (16,116) zum Befestigen der kassettenartigen oder tablettartigen Bauelemente (B) am Halterungsmodul (1),
wobei an der Rückseite (11,111) und/oder an den seitlichen Seitenbereichen (15,115) des Halterungsmoduls (1) Nachrüstöffnungen (2) mit jeweils einem Nachrüstkanal (20) vorgesehen sind, und sich jeder Nachrüstkanal (20) bis zur Frontseite (11,111) des Halterungsmoduls (1) erstreckt und jeder Nachrüstkanal (20) das Verlegen einer optischen Faser durch das Halterungsmodul (1) hindurch erlaubt
und/oder
am Halterungsmodul (1) mindestens ein Faserkanal (3) zur Aufnahme einer Mehrzahl optischer Fasern und mit Ein-Austrittsöffnungen (34) zur Führung optischer Fasern von und zu den kassettenartigen oder tablettartigen Bauelementen (B) vorgesehen ist, der sich entlang der Stapelrichtung (S) über das Halterungsmodul (1) erstreckt und der Faserkanal (3) ein Faserkanalbegrenzungselement (30) aufweist, das aus einer geschlossenen, den Faserkanal (3) begrenzenden Position, vom Halterungsmodul (1) derart demontierbar oder in eine lagestabil geöffnete Position bewegbar ist, dass eine in Stapelrichtung (S) erstreckte Faserkanalöffnung (32) des Faserkanals zum Einlegen optischer Fasern in den Faserkanal (3) entsteht oder sich eine bereits vorhandene Faserkanalöffnung (32) quer zur Stapelrichtung (S) betrachtet verbreitert.

2. Halterungsmodul (1) gemäß Anspruch 1, **dadurch gekennzeichnet, dass** der Faserkanal (3) derart ausgebildet und angeordnet ist, dass der Faserkanal (3) des Halterungsmoduls entlang der Stapelrichtung (S) betrachtet bei gestapelter Anordnung einer Mehrzahl solcher Halterungsmodule zu einem aus den Faserkanälen benachbarter Halterungsmodule modular aufgebauten Faserkanal fluchtet.

3. Halterungsmodul (1) gemäß Anspruch 1 oder 2, **dadurch gekennzeichnet, dass** der obere Seitenbereich (13,113) und der untere Seitenbereich (14,114) flach ausgebildet sind.

4. Halterungsmodul (1) gemäß einem der Ansprüche 1 bis 3, **dadurch gekennzeichnet, dass** der Faserkanal (3) mit seiner äußeren Begrenzung zumindest einen Teil eines der beiden seitlichen Seitenbereiche (15,115) des Halterungsmoduls (1) bildet.

5. Halterungsmodul (1) gemäß Anspruch 4, **dadurch gekennzeichnet, dass** das Halterungsmodul (1) einen weiteren Faserkanal (3) mit Ein-Austrittsöffnungen (34) zur Führung optischer Fasern von und zu den kassettenartigen oder tablettartigen Bauelementen (B) aufweist, der im Bereich des anderen der beiden seitlichen Seitenbereiche (15,115) angeordnet ist.

6. Halterungsmodul (1) gemäß Anspruch 5, **dadurch gekennzeichnet, dass** das Halterungsmodul (1) entlang der Stapelrichtung (S) betrachtet hinsichtlich der Anordnung der Faserkanäle (3) und/oder der Anordnung der Nachrüstöffnungen (2) mit den Nachrüstkanälen (20) spiegelsymmetrisch aufgebaut ist.

7. Halterungsmodul (1) gemäß einem der Ansprüche 1 bis 6, **dadurch gekennzeichnet, dass** das beweglich ausgebildete Faserkanalbegrenzungselement (30) in einer derartigen Lagereinrichtung (32) angeordnet ist, dass das Faserkanalbegrenzungselement (30) durch eine Translationsbewegung und/oder durch eine Rotationsbewegung in die lagestabil geöffnete Position bewegbar ist.

8. Halterungsmodul (1) gemäß Anspruch 7, **dadurch gekennzeichnet, dass** das beweglich ausgebildete Faserkanalbegrenzungselement (30) für den Fall einer reinen Rotationsbewegung einstückig mit dem Halterungsmodul (1) ausgebildet ist oder für den Fall einer reinen Translationsbewegung oder den Fall einer kombinierten Rotations-Translationsbewegung als separates Bauelement ausgebildet ist.

9. Halterungsmodul (1) gemäß einem der Ansprüche 1 bis 8, **dadurch gekennzeichnet, dass** die Nachrüstkanäle (20) benachbart zu den Ein-und Austrittsöffnungen (34) des Faserkanals (3) im Bereich der Fixiermittel (16,116) zum Befestigen der kassettenartigen oder tablettartigen Bauelemente (B) aus der Frontseite (11,111) des Halterungsmoduls austreten.

10. Halterungsmodul (1) gemäß Anspruch 9, **dadurch gekennzeichnet, dass** die Nachrüstkanäle (20) der Nachrüstöffnungen (2) entlang der Stapelrichtung (S) betrachtet benachbart zueinander und äquidistant am Halterungsmodul (1) angeordnet sind.

11. Halterungsmodul (1) gemäß Anspruch 10, **dadurch gekennzeichnet, dass** senkrecht zur Stapelrichtung (S) betrachtet jeder der Nachrüstkanäle (20) auf eines der Fixiermittel (116) zum Befestigen der kassettenartigen oder tablettartigen Bauelemente (B) zuläuft, wobei die Fixiermittel (116) entsprechend äquidistant zu den Nachrüstkanälen (20) entlang der Stapelrichtung (S) angeordnet sind.

12. Halterungsmodul (1) gemäß Anspruch 10 oder 11, **dadurch gekennzeichnet, dass** die Nachrüstkanäle (20) in einer durch den Faserkanal (3) und die Fixiermittel (16,116) aufgespannten Ebene aus der Frontseite (11,111) des Halterungsmoduls austreten.

13. Halterungsmodul (1) gemäß einem der Ansprüche 1 bis 12, **dadurch gekennzeichnet, dass** entlang der Stapelrichtung (S) betrachtet benachbart zu jedem Nachrüstkanal (20) auf der Frontseite (11,111) des Halterungsmoduls eines der Fixiermittel (16,116) zum Befestigen der kassettenartigen oder tablettartigen Bauelemente (B) angeordnet ist.

14. Halterungsmodul (1) gemäß einem der Ansprüche 1 bis 13, **dadurch gekennzeichnet, dass** das Halterungsmodul (1) ein erstes Halterungsteilmodul (10) und ein an dem ersten Halterungsteilmodul fixierbares zweites Halterungsteilmodul (100) aufweist.

15. Halterungsmodul (1) gemäß Anspruch 14, **dadurch gekennzeichnet, dass** die Nachrüstöffnungen (2) an den seitlichen Seitenbereichen (15,) des ersten Halterungsteilmoduls (10) angeordnet sind und dass der Faserkanal (3) und das Faserkanalbegrenzungselement (30) am zweiten Halterungsteilmodul (100) angeordnet sind.
